Europäisches Patentamt

(19) European Patent Office

Office européen des brevets

(11) Publication number: **0 014 774**
**A1**

## (12) EUROPEAN PATENT APPLICATION

(21) Application number: **79200070.5**

(22) Date of filing: **09.02.79**

(51) Int. Cl.³: **H 04 M 11/00**

(43) Date of publication of application:
03.09.80 Bulletin 80/18

(84) Designated Contracting States:
DE FR GB SE

(71) Applicant: SHELL INTERNATIONALE RESEARCH
MAATSCHAPPIJ B.V.
Carel van Bylandtlaan 30
NL-2596 HR DEN HAAG(NL)

(72) Inventor: Verhaagen, Caspar
Badhuisweg 3
NL-1031 CM Amsterdam(NL)

(72) Inventor: Spaargaren, Klaas
Badhuisweg 3
NL-1031 CM Amsterdam(NL)

(72) Inventor: Schoonbrood, Jan Joseph Louis Robert
29 rue De Berri
Paris-8(FR)

(74) Representative: Keuzenkamp, Abraham et al,
c/o Shell Internationale Research Maatschappij B.V. P.O.
Box 302
NL-2501 CH 's-Gravenhage(NL)

(54) **Apparatus and method for the transmission of data (information).**

(57) Apparatus and method for transmission of information from locations spread over a large area to a central point (I) where data processing takes place, all locations and said central point having a normally operating telephone connection, wherein each location (II) is equipped with a memory for the temporary recording of the information to be transmitted and in which each memory is equipped with a switching device (4), which can connect the memory, with the telephone line (1) to the central point with simultaneous blocking of the telephone apparatus (5) present in that location as long as the memory is connected, which switching devices can be activated from the central point via the telephone line by a special signal.

EP 0 014 774 A1

Croydon Printing Company Ltd.

I

II

1

## APPARATUS AND METHOD FOR THE TRANSMISSION OF DATA
## (INFORMATION)

The invention relates to an apparatus and a method for the transmission of management data (information) from fuel stations or depots spread over a large area to a central point, where data processing takes place, all fuel stations on depots just as the central points having a normally operating telephone connection.

An important example of locations spread over a large area is a network of service stations for road traffic in a district. Such a network may comprise many dozens of stations, which are managed and must be supplied from a central point, the district office. Many data play a role here, such as stocks of the various products, quantities delivered, distribution of customer calls over a given time, money received, etc. Such data are generally entered on lists and are very important for efficient management. It may also provide a sounder basis for the optimization of the supply.

It is essential that the data should be available at a central point and this can be done by having normal telephone calls between each fuel station or depot and the central point. However, this is a very digressive way. The apparatus and method according to the invention remove these difficulties and the invention provides the means with which these data can be transmitted in an effective, inexpensive and flexible way.

The invention therefore is characterized in that a switching device is present at the fuel station or depot just as at the central point, said switching device upon activation, connects said relevant fuel station or depot with the central point and data processing device by way of the telephone line, whereas a simultaneous blocking of the telephone apparatus at the central point and at the fuel station or depot exists, as long as the data processing device is linked with the fuel station or depot and in that each fuel station or depot is equipped with a memory for the temporary recording of information to be transmitted to the central point, whereas said memory is connected with a receiver at the central point through the telephone line by way of said switching device to be activated by means of an activating device related to said fuel station or depot, and in that further a signal element is present at the fuel station or depot, said element serving to reset the switching device of the fuel station or depot after finishing reading out, and in that a signal element being present at the central point, said element before reading out acting upon said signal element at the fuel station or depot by way of the telephone line by means of a special signal, and a reset device for the switching device at the central point after reading out also being present.

Said special signal may be a signal to which the normal telephone apparatus is not sensitive.

Considerable advantages are achieved with this apparatus. Use is made of existing telephone lines with which each location is equipped in any case. During transmission of the information normal telephone services at the location concerned are not available. This is hardly a restriction, since - depending on the information to be transmitted - reading takes only a few seconds and at most one minute. As a rule it will be sufficient to read once every 24 hours. In addition, it is of course possible to do this out of business hours, since it can all be done automatically. When an installation is called from the central point and the telephone at the location is found to be engaged, the telephone conversation at the location is not broken, but the location(s) concerned is (are) called again after termination of one round of readings until all data have been collected. The normal telephone bell may ring when a location is called for reading, but this is not necessary. When the connection has been made, a special alarm signal is given, for instance an alternating current of a certain frequency, to which the switching device reacts. The switching device may contain a bi-stable switching element, equipped with a signal-identification device.

Calling the locations one after the other may very conveniently be done by an automatic selector.

The apparatus according to the invention is very flexible as regards its potentialities, because any normal telephone connection may be used. Only a minor operation is necessary to connect a location to the reading apparatus.

The memory in the location can be fed with information in any convenient way. As a rule, a minicomputer will be used here to code the information by conversion into a series of pulses and to direct the information to the desired place in memory. Certain data which are constantly available, such as the level in the underground tanks of a service station, do not pass through the memory until the reading. Other data such as the distribution of sales over the day will obviously have to be collected and stored. The data to be registered may be conducted to the input of the memory fully automatically and by known means. Obviously, this may also be done entirely or partly by human action.

4

At the central point the incoming information is decoded in a suitable way and processed, as a rule by a computer.

An apparatus according to the invention is also very suitable for other applications, such as reading of results from widely spread test stations at drilling locations, at depots, at tank farms or for the transmission of data from, for instance, branch offices of a bank to a central point.

The invention will now be further explained with the aid of a block scheme according to the attached drawing.

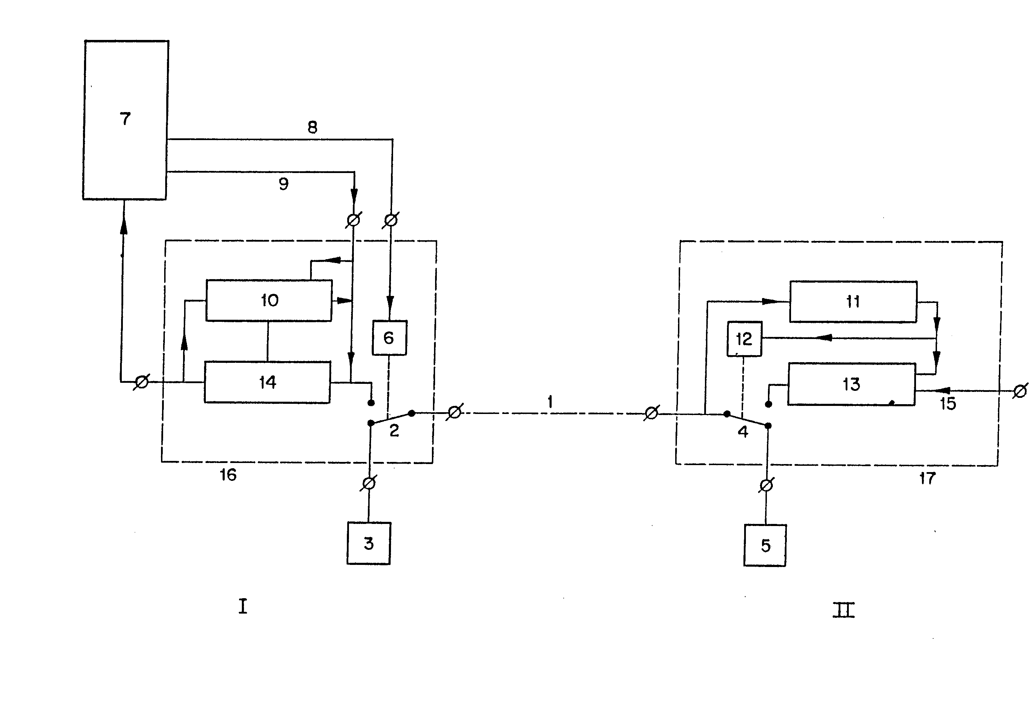

In Fig. 1 number 1 indicates a telephone line which may connect a central point I with a location II. Telephone line 1 runs via a normal exchange, not further indicated here.

Switch 2, in the normal position, connects telephone apparatus 3 with telephone line 1. The same is done by switch 4 with telephone apparatus 5. Switch 2 can be put in the desired positions by actuator 6. The required signals are emitted by computer 7 via line 8. When actuator 6 puts switch 2 in the position not drawn. telephone apparatus 3 is disconnected. Subsequently, computer 7 emits pulses via line 9 with which location II is called.

This is done by emitting the pulses for the normal subscriber's number. Moreover, frequency generator (tone generator) 10 is switched on at the right moment. This frequency generator produces, for instance, a frequency of 1300 Hz. The connection with location II has meanwhile been made. Frequency detector (tone detector) 11 recognizes the emitted frequency of 1300 Hz and activates actuator 12, which puts switch 4 in the position not drawn. Telephone apparatus 5 is thus disconnected and telephone line 1 is connected with element 13, which contains, inter alia, a signal converter, a memory and a pulse generator.

For a short time a reply frequency of for instance 2100 Hz is emitted by element 13 to the central point.

Receiver 14 reacts to it by instructing computer 7 to carry out the program of data reading. These data are transmitted via receiver 14 to computer 7. By decoding and further processing the data become available in the desired form. An "end-of-message" signal from element 13 puts switch 4 back in the position drawn. The same happens to switch 2 with an end signal from computer 7. The normal telephone connection is now available again.

Line 15 indicates the place where the data to be transmitted from the meters and other sources, not drawn here, are conducted to element 13.

Broken lines 16 and 17 indicate that the parts inside these lines have been assembled in boxes, which can be connected, via the external connections shown, to parts and lines as indicated.

1

<u>C L A I M S</u>

1.    An apparatus for the transmission of management data
(information) from fuel stations or depots spread over a
large area to a central point where data processing takes
place, all fuel stations or depots just as the central point
having a normally operating telephone connection, characterized
in that a switching device is present at the fuel station
or depot just as at the central point, said switching device,
upon activation, connects said relevant fuel station or depot
with the central point and data processing device by way of
the telephone line, whereas a simultaneous blocking of the
telephone apparatus at the central point and at the fuel
station or depot exists, as long as the data processing device
is linked with the fuel station or depot and in that each
fuel station or depot is equipped with a memory for the
temporary recording of information to be transmitted to the
central point, whereas said memory is connected with a receiver
at the central point through the telephone line by way of said
switching device to be activated by means of an activating device
related to said fuel station or depot, and in that further a
signal element is present at the fuel station or depot, said
element serving to reset the switching device of the fuel
station or depot after finishing reading out, and in that a
signal element being present at the central point, said element
before reading out acting upon said signal element at the fuel
station or depot by way of the telephone line by means of a special signal, and a reset device for the switching device at the_central point after reading out also being present.

2.  Apparatus as claimed in claim 1 characterized in that said signal device for activating the switching device at the fuel station or depot is a tone detector, supplying a pulse to the processing device, whereupon data are read out.

3.  Apparatus as claimed in claims 1 or 2, characterized in that the signal device at the central point is a tone generator.

4.  Apparatus as claimed in claims 1, 2 or 3 characterized in that the data processing device is a computer, resetting the switching device at the central point after finishing reading-out.

5.  Method for transmitting management-data (information) from fuel stations or depots spread over a large area to a central point, where said data are processed, whereas normal telephone calls at the central point and at the fuel stations or depots are possible characterized in that, if it is desired to transmit data, a connection is made between the central point and the relevant fuel station or depot by way of the telephone line with simultaneous blocking the normal existing telephone connection between the central point and the fuel station or depot as long as the connection exists by way of switching devices being present at the central point and at the fuel station or depot, and in that the switching device at the fuel station or depot is activated by a related activation device and the switching device at the central point by a related activation device, and in that a signal device, being present at the central point acts through the telephone line upon the activation device of the fuel station or depot by means of a special signal, and in that further a memory, being present at the fuel station or depot,

^014774

is read out and the switching device at the fuel station or depot after being read out is reset by means of a signal element relating to the fuel station or depot and further the switching device at the central point is reset by means of a signal device relating to the central point.

II

I

## DOCUMENTS CONSIDERED TO BE RELEVANT

| Category | Citation of document with indication, where appropriate, of relevant passages | Relevant to claim |
|---|---|---|
| | <u>FR - A - 1 433 793</u> (LICENTIA)<br>* Page 1, right-hand column, line 33 to page 2, right-hand column, line 43; figure * | 1-3,5 |
| | -- | |
| | <u>US - A - 3 072 894</u> (CHAPIN)<br>* Column 2, lines 21 to 64; figure 1 * | 1-3,5 |
| | -- | |
| | <u>US - A - 3 553 376</u> (BOGAART)<br>* Column 2, lines 7 to 67; figure 1 * | 1-3,5 |
| | -- | |
| | <u>US - A - 3 962 545</u> (ABE)<br>* Column 3, line 12 to column 4, line 35; claims 1 to 8; figures 1 to 4 * | 1,5 |
| | -- | |
| | <u>US - A - 4 059 727</u> (KINGSWELL)<br>* Column 1, lines 55 to 65; claims 1,4,5 * | 1,5 |
| | -- | |
| | <u>US - A - 3 820 074</u> (TOMAN)<br>* Column 2, lines 37 to 54; claims 1 to 4 and 18; figure 1 * | 1,5 |
| | -- | |
| | <u>US - A - 3 989 898</u> (DUGAN)<br>* Column 2, lines 8 to 18 and 39 to 64 * | 1,5 |

---

CLASSIFICATION OF THE APPLICATION (Int. Cl.²)

H 04 M 11/00

TECHNICAL FIELDS SEARCHED (Int.Cl.²)

H 04 M 11/00

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 27-09-1979 | WANZEELE |

EPO Form 1503.1 06.78